# FASCICULE DE BREVET EUROPEEN

(11) **EP 4 112 388 B1**
(45) Date de publication et mention de la délivrance du brevet: **17.04.2024**
(21) Numéro de dépôt: 22182276.0
(22) Date de dépôt: 30.06.2022
(51) Int. Cl.: B60R 11/02, H04R 5/02

(54) **VÉHICULE AUTOMOBILE AVEC SYSTÈME DE SONORISATION**
KRAFTFAHRZEUG MIT SOUNDSYSTEM
MOTOR VEHICLE WITH SOUND SYSTEM

(30) Priorité: 02.07.2021 FR 2107187
(43) Date de publication de la demande: 04.01.2023
(73) Titulaire: Devialet, 75001 Paris (FR)
(72) Inventeur: JULIEN, Vincent, 93420 VILLEPINTE (FR); VERICEL, Baptiste, Loïc, Robin, 69007 LYON (FR)
(74) Mandataire: Lavoix

(56) Documents cités:
- WO-A1-2021/068028
- FR-A1- 2 975 857
- US-A1- 2005 213 786

## Description

La présente invention concerne un véhicule automobile du type définissant un axe longitudinal central selon lequel le véhicule est destiné à se déplacer, un côté avant selon l'axe longitudinal, et un plan médian du véhicule, le plan médian passant par l'axe longitudinal et étant vertical lorsque le véhicule se trouve sur une surface horizontale, le véhicule comprenant :
- une structure,
- un panneau avant rapporté sur la structure et formé par une planche de bord et un tablier du véhicule, et
- un revêtement de plancher, le panneau avant et le revêtement de plancher délimitant partiellement un habitacle du véhicule,
le véhicule comprenant en outre un système de sonorisation incluant au moins un haut-parleur de grave.

L'invention concerne également un procédé correspondant de sonorisation du véhicule automobile.

Traditionnellement, les véhicules automobiles personnels ou les taxis comportaient un ou plusieurs haut-parleurs analogues entre eux et capables de générer des ondes sonores sur une gamme relativement large. Un tel système de sonorisation ne permet pas d'atteindre une très bonne qualité sonore.

Pour améliorer cette qualité, certains systèmes de sonorisation plus modernes intègrent des haut-parleurs situés en bas de portière permettent généralement de restituer des fréquences graves, inférieures à 200 Hz, mais également des fréquences un peu plus hautes pouvant monter jusque 1000 ou 2000 Hz. Ces systèmes de sonorisation intègrent alors en général d'autres haut-parleurs dédiés aux sons médium, de fréquences comprises entre 200 Hz et une valeur comprise entre 1 kHz et 6 kHz, et/ou aigus, de fréquences supérieures à une valeur comprise entre 1 kHz et 6 kHz et pouvant aller jusqu'à 14 ou 20 kHz. Ces haut-parleurs sont par exemple situés dans la planche de bord du véhicule, qui comprend le tableau de bord situé devant le conducteur, et un prolongement transversal du tableau de bord situé immédiatement devant un éventuel passager. De tels systèmes de sonorisation ne permettent pas encore d'atteindre une très grande qualité sonore.

Les systèmes de sonorisation haut de gamme actuels comprennent à cet effet un caisson de grave (en anglais « *subwoofer* ») dédié aux fréquences allant de 20 Hz à 60 Hz. Le caisson de grave est en général placé dans le coffre ou sous un siège avant du véhicule.

Toutefois, ce placement sous le siège n'est pas pratique, du fait d'un manque d'espace. Le coffre offre plus d'espace, mais ne constitue pas une bonne source de sons graves, notamment en raison d'un mauvais transfert vers l'habitacle des fréquences aux alentours de 60 à 70 Hz.

Plus récemment, certains acteurs du domaine ont développé des systèmes de sonorisation comprenant un ou deux haut-parleurs de grave, faisant office de *subwoofer,* et intégrés au niveau du tablier du véhicule, c'est-à-dire la partie de structure séparant l'habitacle d'un logement avant dans lequel se trouve en général le moteur. La membrane de ces haut-parleurs se situe par exemple dans le prolongement du tablier. Ceci permet d'atteindre une bonne qualité sonore, mais présente le désavantage que le tablier doit être prévu pour accueillir ces haut-parleurs de grave. En pratique, le constructeur du véhicule doit adapter le tablier, ce qui doit être prévu très en amont pendant la conception du véhicule.

Une autre solution connue consiste à intégrer un ou plusieurs haut-parleurs de grave dans des orifices débouchant dans l'habitacle, par exemple à proximité d'une des roues arrière. Le ou les haut-parleurs rayonnent à partir de ces orifices. Un défaut de cette solution est, précisément, qu'elle impose de modifier le véhicule de manière importante, et de traiter les remontées de bruits extérieurs via ces orifices.

Le document US 2005/213786 décrit un système de sonorisation d'un véhicule automobile, comportant un caisson de basses situé à l'avant du véhicule.

Un but de l'invention est de fournir un véhicule automobile du type décrit ci-dessus, avec un système de sonorisation haut de gamme plus facile et/ou moins cher à mettre en oeuvre.

A cet effet, l'invention a pour objet un véhicule automobile selon la revendication 1.

Selon des modes particuliers de réalisation, le véhicule automobile comprend l'une ou plusieurs des caractéristiques correspondant aux revendications 2 à 7, prise(s) isolément ou selon toutes les combinaisons techniquement possibles.

L'invention a aussi pour objet un procédé de sonorisation selon la revendication 8.

L'invention sera mieux comprise à la lecture de la description qui va suivre, donnée uniquement à titre d'exemple et faite en se référant aux dessins annexés, sur lesquels :
- la figure 1 est une vue schématique de dessus d'un véhicule automobile selon l'invention,
- la figure 2 est une vue schématique de face du véhicule automobile représenté sur la figure 1,
- la figure 3 est une vue schématique, de dessus, d'une enceinte acoustique représentée sur les figures 1 et 2,
- les figures 4 à 6 sont des vues schématiques, de dessus, d'enceintes acoustiques constituant des variantes de l'enceinte acoustique représentée sur les figures 1 à 3, et
- la figure 7 est une vue schématique, de dessus, d'un véhicule automobile constituant une variante du véhicule automobile représenté sur les figures 1 et 2, l'enceinte acoustique étant placée à un endroit différent par rapport à l'habitacle.

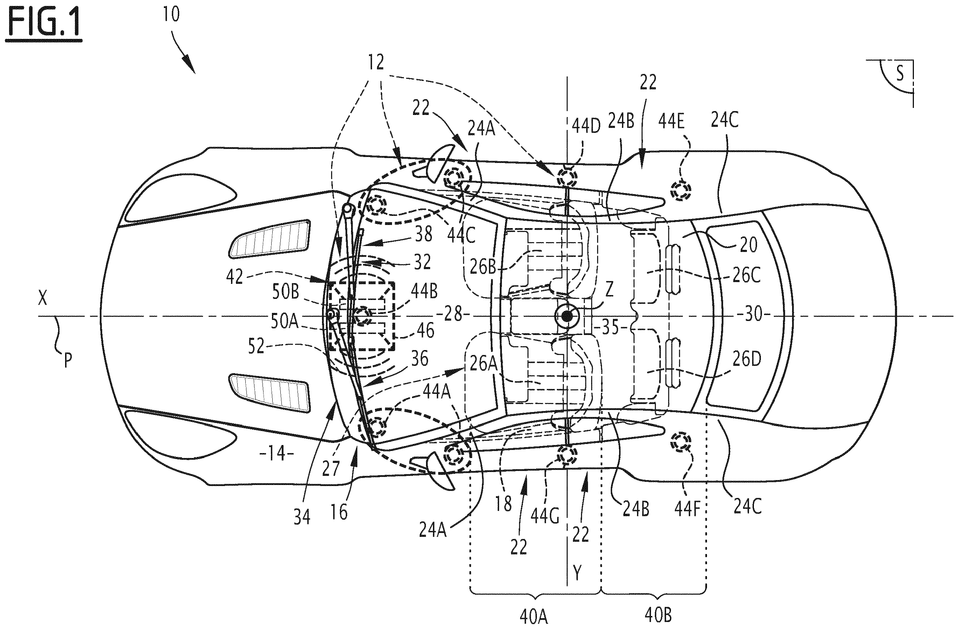

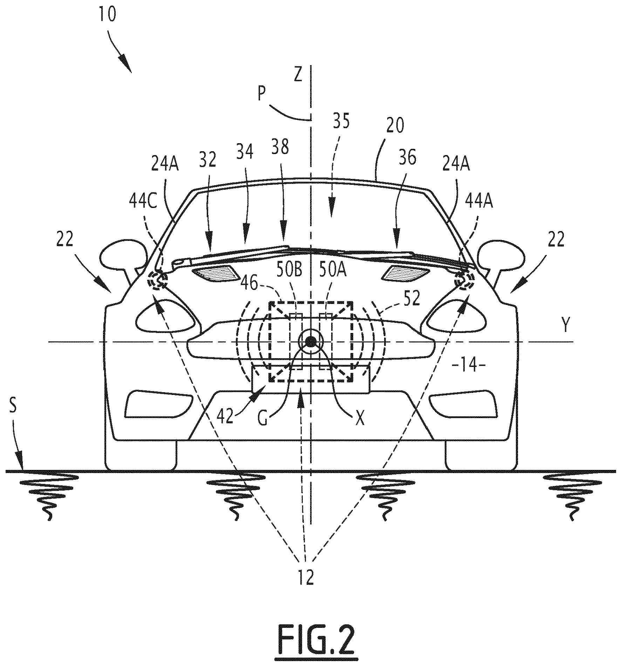

En référence aux figures 1 et 2, on décrit un véhicule automobile 10 équipé d'un système de sonorisation 12.

Le véhicule automobile 10 est par exemple une voiture particulière ou un taxi.

Le véhicule automobile 10 définit un axe longitudinal X central, selon lequel il est destiné à se déplacer, et un côté avant selon l'axe longitudinal X figuré par le sens normal de la marche du véhicule automobile. On définit également un plan médian P passant par l'axe longitudinal X et vertical lorsque le véhicule automobile 10 se trouve sur une surface S horizontale. On définit encore un axe transversal Y perpendiculaire au plan médian, et un axe vertical Z perpendiculaire à l'axe longitudinal X et à l'axe transversal Y.

Le véhicule automobile 10 comprend une structure 14 destinée à lui assurer une certaine rigidité, un panneau avant 16, et un revêtement de plancher 18.

Le véhicule automobile 10 comprend aussi un plafond 20, des portières 22 latérales et des montant 24A, 24B, 24C s'étendant au moins verticalement à partir du plafond vers le bas. Ces montants sont parfois appelés « pieds » dans le domaine automobile.

Le véhicule automobile 10 comprend deux, quatre, ou plus, portières 22 latérales.

Dans l'exemple, le véhicule comprend quatre portières 22 latérales desservant quatre sièges 26A, 26B, 26C, 26D.

Selon des variantes non représentées et connues en elles-mêmes, le véhicule automobile 10 comprend par exemple :
- deux portières latérales desservant deux sièges, quatre cinq ou six sièges, ou
- plus de quatre portières latérales desservant plus de quatre sièges.

Selon un mode de réalisation particulier, certains sièges, tels que les sièges 26C et 26D, sont formés par une ou des banquettes.

Les montants 24A, 24B, 24C forment des paires symétriques par rapport au plan médian P.

Dans l'exemple représenté, les deux montants 24A séparent un pare-brise avant 28 des portières 22 avant. Les deux montants 24B séparent les portières 22 avant des portières 22 arrière. Les deux montants 24C séparent les portières 22 arrière d'un pare-brise arrière 30.

Le panneau avant 16 comprend une planche de bord 32 fixée sur un tablier 34 de la structure.

Le tablier 34 et le revêtement de plancher 18 délimitent partiellement un habitacle 35 du véhicule automobile 10.

La planche de bord 32 comprend un tableau de bord 36 situé devant un conducteur (non représenté) du véhicule automobile 10, et un prolongement transversal 38 du tableau de bord 36, le prolongement transversal étant situé devant un éventuel passager avant (non représenté et qui serait assis dans le siège 26B).

Le tablier 34 est une pièce de structure située longitudinalement devant la planche de bord 32. Le tablier 34 s'étend verticalement par exemple de la base du pare-brise du véhicule 10 jusqu'aux pieds du conducteur.

L'habitacle 35 comprend, successivement selon l'axe longitudinal X, une zone avant 40A prévue pour recevoir le conducteur, et une zone arrière 40B prévue pour recevoir des passagers à l'arrière du conducteur.

La zone avant 40A et la zone arrière 40B sont par exemple séparées l'une de l'autre dans la direction longitudinale X par un côté arrière du siège 26A.

Le système de sonorisation 12 comprend une enceinte acoustique 42, et optionnellement un ou plusieurs autres haut-parleurs 44A à 44G situés dans l'habitacle 35.

Comme visible sur les figures 1 et 2, mais surtout 3, l'enceinte acoustique 42 comprend un caisson 46 définissant deux ouvertures 48A, 48B, et deux haut-parleurs de grave 50A, 50B montés respectivement dans les deux ouvertures.

L'enceinte acoustique 42 est située à proximité du plan médian P. Par exemple, l'enceinte acoustique 42, avec tout ce qu'elle contient, possède un barycentre G situé à 20 cm ou moins du plan médian P. Par exemple, le barycentre G est situé dans le plan médian P.

L'enceinte acoustique 42 est solidaire de la structure 14. L'enceinte acoustique 42 est située longitudinalement entre le tablier 34 et un bord avant 27 du siège 26A.

Si la position du siège 26A est réglable dans la direction longitudinale X, l'enceinte acoustique 42 est située longitudinalement à l'avant du bord avant 27 lorsque que le siège 26A est situé dans sa position la plus à l'arrière (non représentée). De préférence, l'enceinte acoustique 42 est également située longitudinalement à l'avant du bord avant 27 lorsque que le siège 26A est situé dans sa position médiane (non représentée) entre sa position la plus à l'arrière et sa position la plus à l'avant.

La structure de l'enceinte acoustique 42 (nombre et structure des haut-parleurs, forme du caisson 16, par exemple), n'impose pas de modifier la structure du tablier 34.

Le caisson 46 est par exemple de forme parallélépipédique.

Le caisson 46 est destiné à former un « support universel », dans l'exemple pour les haut-parleurs de grave 50A, 50B, ces haut-parleurs appartenant par exemple à une gamme prédéfinie. Le caisson 46 présente avantageusement des dimensions prédéfinies par rapport au panneau avant 16.

Par « haut-parleur de grave », on entend par exemple que le haut-parleur possède une structure (connue en elle-même de l'homme du métier) adaptée pour émettre des ondes sonores 52 dans une bande passante incluant une gamme de fréquences allant de 60 Hz à 150 Hz.

Avantageusement, la bande passante du haut-parleur de grave inclut la gamme allant de 20 Hz à 60 Hz, voire de 15Hz à 60Hz, ce qui fait de l'enceinte acoustique 42 un caisson de grave (en anglais « *subwoofer »).*

Les haut-parleurs de grave 50A, 50B sont avantageusement structurellement analogues l'un à l'autre et disposés dos-à-dos selon un axe D, par exemple sensiblement parallèle à l'axe transversal Y, afin de réduire les vibrations générées par l'enceinte acoustique 42.

Avantageusement, une tige métallique 54 relie les moteurs magnétiques 56A, 56B des haut-parleurs de grave 50A, 50B, ce qui permet de réduire encore les vibrations.

Les autres haut-parleur 44A à 44G ne font pas partie de l'enceinte acoustique 42 et sont par exemple visibles depuis l'habitacle 35.

Les autres haut-parleurs 44A à 44G comprennent par exemple un ou plusieurs haut-parleurs de médium et d'aigu 44B, 44D, 44G, ayant une bande passante allant d'une fréquence comprise entre 150 Hz et 350 Hz à une fréquence d'au moins 14 kHz. En complément ou en variante, les autres haut-parleurs 44A à 44G comprennent par exemple un ou plusieurs haut-parleurs de médium 44E, 44F ayant une bande passante allant d'une fréquence comprise entre 150 Hz et 350 Hz à une fréquence comprise entre 1 kHz et 6 kHz, et un haut-parleur d'aigu 44B, ou en variante plusieurs, ayant une bande passante allant d'une fréquence comprise entre 1 kHz et 6kHz à une fréquence d'au moins 14 kHz.

Les autres haut-parleurs 44A à 44G, indépendamment de leurs caractéristiques acoustiques, sont avantageusement situés à proximité de ou dans les montants 24A (pour les haut-parleurs 44C et 44A dans l'exemple représenté), les montants 24B (pour les haut-parleurs 44D et 44G dans l'exemple), ou les montants 24C (pour les haut-parleurs 44E et 44F). Les haut-parleurs 44A et 44C sont par exemple situés dans la planche de bord 32, dans les montants 24A, ou dans des triangles au niveau de rétroviseurs du véhicule automobile 10.

Selon d'autres variantes encore, tout ou partie des autres haut-parleurs 44A à 44G sont dans les portières 22, ou dans le toit du véhicule automobile.

Les autres haut-parleurs 44A à 44G sont avantageusement disposés symétriquement par rapport au plan médian P.

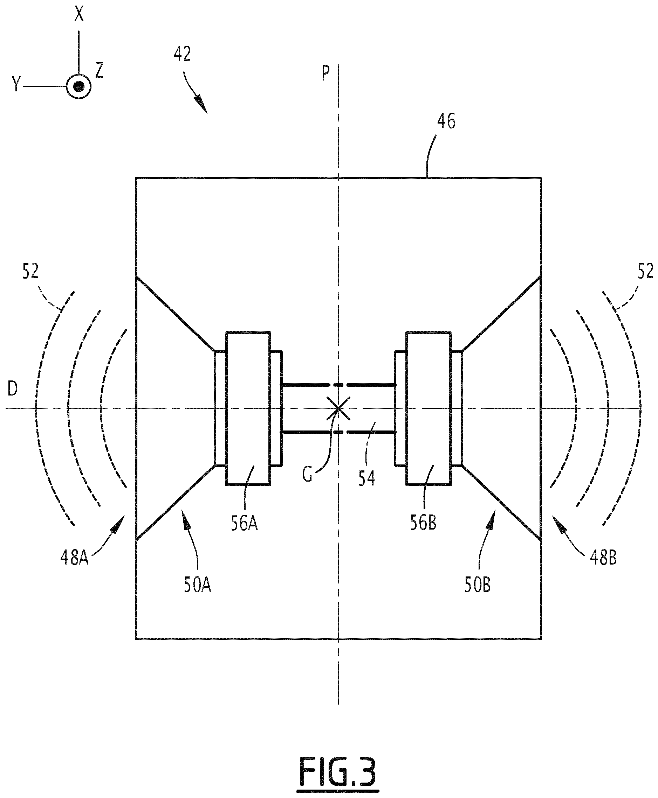

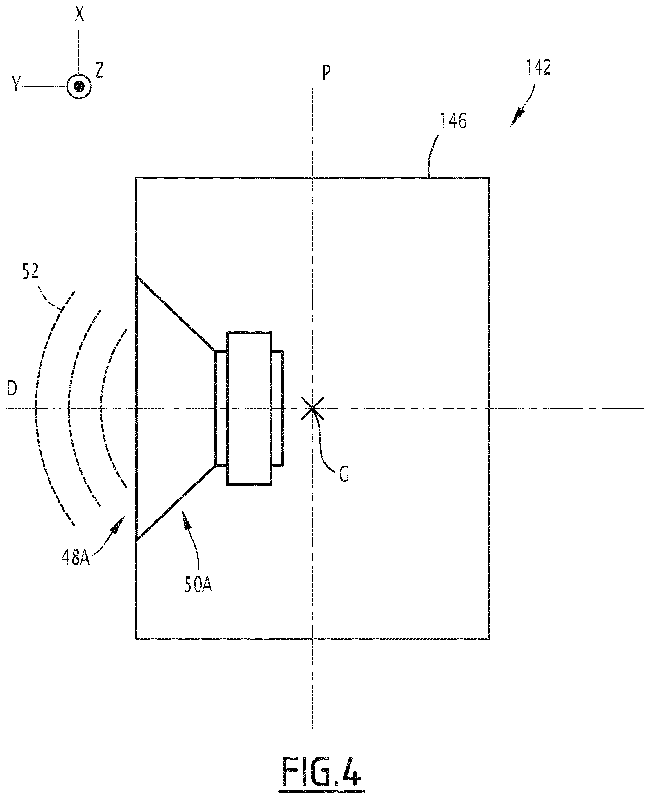

En référence à la figure 4, on décrit une enceinte acoustique 142 constituant une première variante de l'enceinte acoustique 42. L'enceinte acoustique 142 est analogue à l'enceinte acoustique 42 représentée sur les figures 1 à 3. Les éléments similaires portent les mêmes références numériques et ne seront pas décrits à nouveau. Seules les différences seront décrites en détail ci-après.

L'enceinte acoustique 142 comprend un caisson 146 analogue au caisson 46 mais ne définissant qu'une seule ouverture 48A. L'enceinte acoustique 142 ne comprend qu'un seul haut-parleur de grave 50A.

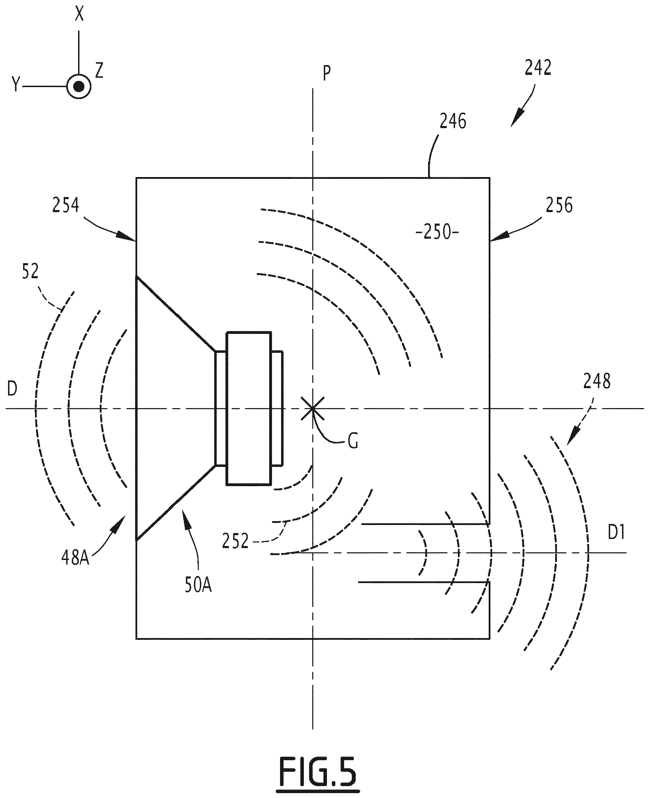

En référence à la figure 5, on décrit une enceinte acoustique 242 constituant une deuxième variante de l'enceinte acoustique 42. L'enceinte acoustique 242 est analogue à l'enceinte acoustique 42 représentée sur les figures 1 à 3. Les éléments similaires portent les mêmes références numériques et ne seront pas décrits à nouveau. Seules les différences seront décrites en détail ci-après.

L'enceinte acoustique 242 comprend un caisson 246 analogue au caisson 46 mais ne définissant qu'une seule ouverture 48A, et définissant un évent 248. L'enceinte acoustique 142 ne comprend qu'un seul haut-parleur de grave 50A.

L'enceinte acoustique 242 définit un volume intérieur 250 destiné à recevoir des ondes sonores 252 générées le haut-parleur de grave 50A, l'évent 248 étant adapté pour canaliser au moins une partie des ondes sonores 252 depuis le volume intérieur 250 vers l'extérieur de l'enceinte acoustique 242.

L'évent 248 et le haut-parleur de grave 50A sont par exemple situés sur deux faces opposées 254, 256 du caisson 246 selon l'axe D du haut-parleur de grave.

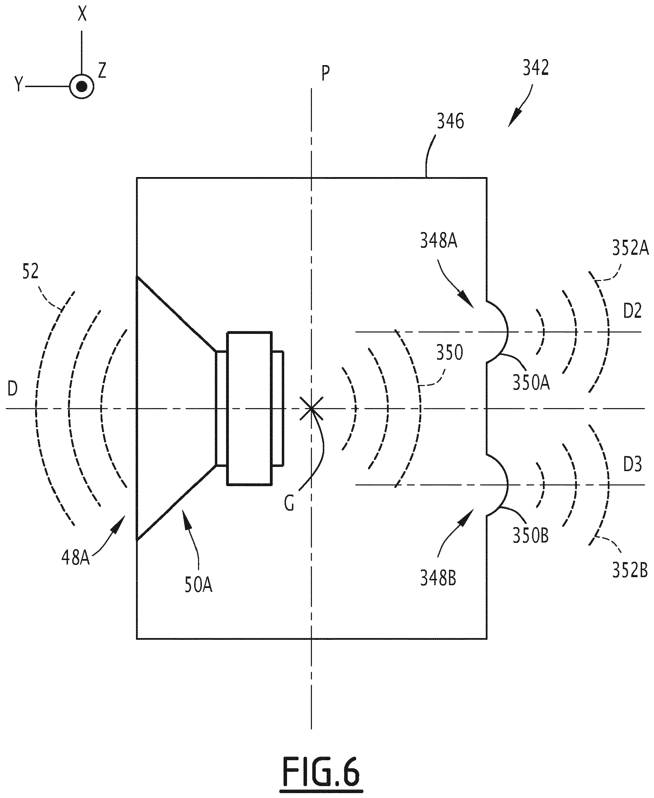

En référence à la figure 6, on décrit une enceinte acoustique 342 constituant une troisième variante de l'enceinte acoustique 42. L'enceinte acoustique 342 est analogue à l'enceinte acoustique 42 représentée sur les figures 1 à 3. Les éléments similaires portent les mêmes références numériques et ne seront pas décrits à nouveau. Seules les différences seront décrites en détail ci-après.

L'enceinte acoustique 342 comprend un caisson 346 ne définissant une seule ouverture 48A pour un seul haut-parleur de grave 50A. Le caisson 346 définit en outre deux ouvertures supplémentaires 348A, 348B, l'enceinte acoustique 342 comprenant en outre deux membranes passives 350A, 350B montées mobiles par rapport au caisson dans les ouvertures supplémentaires.

Selon des variantes non représentées, l'enceinte acoustique 342 peut comprendre un seul haut-parleur passif (encore appelé « radiateur passif »), ou plus de deux. L'enceinte acoustique 342 peut comprendre un nombre quelconque de haut-parleurs actifs et un nombre quelconque de haut-parleurs passifs.

Les membranes passives 350A, 350B sont adaptées pour émettre des ondes sonores 352A, 352B à l'extérieur de l'enceinte acoustique 342. Les membranes passives 350A, 350B fonctionnent comme des sources secondaires excitées par les ondes sonores 350 émises par le haut-parleur de grave 50A dans le caisson 346.

Les membranes passives 350A, 350B sont par exemple situées sur même face du caisson 346, avantageusement opposée à la face définissant l'ouverture 48A.

Le fonctionnement du véhicule automobile 10, ou plus exactement de son système de sonorisation 12, découle de sa structure et va maintenant être très brièvement décrit.

Les sons graves sont émis par les haut-parleurs de grave 50A et 50B depuis le côté arrière du tablier 34, et se propagent dans l'habitacle 35.

Les sons médium ou aigus sont émis par les autres haut-parleurs 44A à 44G directement dans l'habitacle 35.

Grâce aux caractéristiques décrites ci-dessus, notamment l'enceinte acoustique 42, ou bien ses variantes 142, 242, 342, le système de sonorisation 12 du véhicule automobile 10 présente des performances haut de gamme. Il est plus facile et moins cher à mettre en oeuvre, car, quelle que soit justement sa gamme, définie par les caractéristiques structurelles des enceintes acoustiques 42, 142, 242, 342 (nombre et types des haut-parleurs de grave, présence éventuelle de l'évent 248 ou des membranes passives 350A, 350B...), l'enceinte acoustique est facilement intégrée dans le véhicule automobile 10 sans nécessiter une adaptation du tablier 34. Ceci est permis par les caissons 46, 146, 246, 346, qui sont adaptés pour être fixés sur un support standard (structure 14 du véhicule automobile et/ou panneau avant 16).

Le caisson 16 est peu éloigné longitudinalement du tablier 34, ce qui contribue à une bonne propagation des ondes acoustiques 52 vers l'arrière à travers l'habitacle 35. La position de l'enceinte acoustique 12 à proximité du plan médian P autorise en outre une bonne répartition des sons graves dans l'habitacle 35.

Outre sa modularité, le système de sonorisation 12 permet un gain de poids, d'espace, et une réduction des vibrations, en particulier lorsque l'enceinte acoustique comporte deux haut-parleurs de grave dos-à-dos, avantageusement reliés par la tige 54.

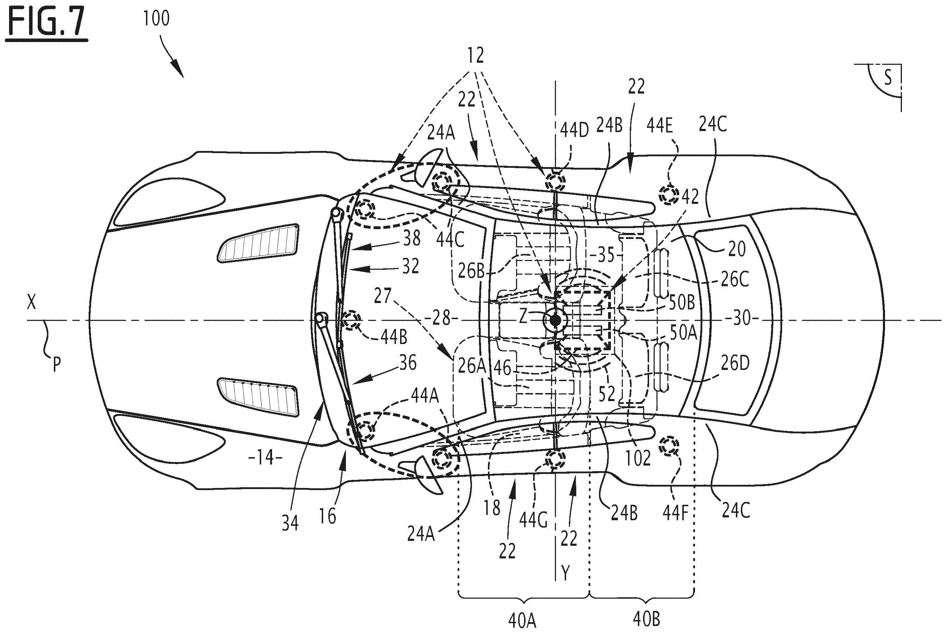

En référence à la figure 7, on va maintenant décrire un véhicule automobile 100 constituant une variante du véhicule automobile 10. Le véhicule automobile 100 est analogue au véhicule automobile 10 représenté sur les figures 1 à 2. Les éléments similaires portent les mêmes références numériques et ne seront pas décrits à nouveau. Seules les différences seront décrites en détail ci-après.

Dans le véhicule automobile 100, l'enceinte acoustique 42 n'est pas située longitudinalement (selon l'axe longitudinal X) entre le tablier 34 et le bord avant 27 du siège 26A, mais à cheval sur la zone avant 40A (prévue dans l'exemple pour recevoir le conducteur) et sur la zone arrière 40B (prévue dans l'exemple pour recevoir d'éventuels passagers arrière), par exemple sous le revêtement de plancher 18, et toujours à proximité du plan médian P.

L'enceinte acoustique 42 n'est donc pas située longitudinalement au niveau des sièges 26A, 26B, mais plus à l'arrière. Selon un mode de réalisation particulier, le barycentre G de l'enceinte acoustique 42 est situé dans la zone arrière 40B.

En variante, l'enceinte acoustique 42 est située non pas sous le revêtement de plancher 18, mais dans une console arrière 102 devant les éventuels passagers arrière.

Une telle position de l'enceinte acoustique 42 est par exemple adaptée à un véhicule utilisé comme taxi, afin d'assurer un son optimal pour les passagers arrière.

Le véhicule automobile 100 présente les mêmes avantages que le véhicule 10, notamment de modularité, car il est possible de faire évoluer le niveau de gamme de l'enceinte acoustique 42 sans avoir à modifier l'habitacle 35, le caisson 46 conservant sensiblement les mêmes dimensions et pouvant être fixé sur des pièces standard.

## Revendications

1. Véhicule automobile (10 ; 100) définissant un axe longitudinal (X) central selon lequel le véhicule automobile (10 ; 100) est destiné à se déplacer, un côté avant selon l'axe longitudinal (X), et un plan médian (P) du véhicule automobile (10 ; 100), le plan médian (P) passant par l'axe longitudinal (X) et étant vertical lorsque le véhicule automobile (10 ; 100) se trouve sur une surface (S) horizontale, le véhicule automobile (10 ; 100) comprenant :
- une structure (14) comportant un tablier (34),
- au moins un siège (26A) avant prévu pour recevoir un conducteur du véhicule automobile (10 ; 100),
- un revêtement de plancher (18), le tablier (34) et le revêtement de plancher (18) délimitant partiellement un habitacle (35) du véhicule automobile (10 ; 100), et
- un système de sonorisation (12) incluant au moins une enceinte acoustique (42 ; 142 ; 242 ; 342) solidaire de la structure (14),
l'enceinte acoustique (42 ; 142 ; 242 ; 342) comprenant :
- un caisson (46 ; 146 ; 246 ; 346) définissant au moins une première ouverture (48A), et
- au moins un premier haut-parleur de grave (50A) monté dans l'ouverture (48A), l'enceinte acoustique (42 ; 142 ; 242 ; 342) étant située à proximité du plan médian (P) :
- soit longitudinalement entre le tablier (34) et un bord avant (27) du siège (26A) avant,
- soit longitudinalement à cheval sur une zone avant (40A) de l'habitacle (35) prévue pour recevoir le conducteur et une zone (40B) arrière de l'habitacle (35) prévue pour recevoir un ou des passagers arrière du véhicule automobile (10 ; 100),
**caractérisé en ce que** le caisson (46) est destiné à former un support universel, et dans lequel :
- le caisson (46) définit en outre une deuxième ouverture (48B), l'enceinte acoustique (42) comprenant en outre un deuxième haut-parleur de grave (50B) structurellement analogue au premier haut-parleur de grave (50A), le deuxième haut-parleur de grave (50B) étant monté dans la deuxième ouverture (48B), dos-à-dos avec le premier haut-parleur de grave (50A), et/ou
- le caisson (346) définit au moins une ou deux ouverture(s) supplémentaire(s) (348A, 348B), l'enceinte acoustique (342) comprenant en outre au moins une ou deux membrane(s) passive(s) (350A, 350B) montée(s) mobile(s) par rapport au caisson (346) dans la ou respectivement dans les ouverture(s) supplémentaire(s) (348A, 348B), la ou les membrane(s) passive(s) (350A, 350B) étant adaptées pour émettre des ondes sonores (352A, 352B).

2. Véhicule automobile (10 ; 100) selon la revendication 1, dans lequel le premier haut-parleur de grave (50A) possède une bande passante incluant une gamme de fréquences allant de 60 Hz à 150 Hz.

3. Véhicule automobile (10 ; 100) selon la revendication 1 ou 2, dans lequel l'enceinte acoustique (42 ; 142 ; 242 ; 342) possède un barycentre (G) situé à 20 cm ou moins du plan médian (P).

4. Véhicule automobile (10 ; 100) selon l'une quelconque des revendications 1 à 3, dans lequel le premier haut-parleur de grave (50A) et le deuxième haut-parleur de grave (50B) comprennent respectivement deux moteurs magnétiques (56A, 56B), l'enceinte acoustique (42) comprenant au moins une tige métallique (54) reliant mécaniquement les deux moteurs magnétiques (56A, 56B) l'un à l'autre.

5. Véhicule automobile (10 ; 100) selon l'une quelconque des revendications 1 à 4, dans lequel l'enceinte acoustique (242) définit un volume intérieur (250) destiné à recevoir des ondes sonores (252) générées au moins par le premier haut-parleur de grave (50A), le caisson (246) comportant en outre au moins un évent (248) adapté pour canaliser au moins une partie des ondes sonores (252) depuis le volume intérieur (250) vers l'extérieur de l'enceinte acoustique (242).

6. Véhicule automobile (10 ; 100) selon l'une quelconque des revendications 1 à 5, dans lequel le système de sonorisation (12) comprend en outre au moins un haut-parleur de médium et d'aigu (44B, 44D, 44G) ayant une bande passante allant d'une fréquence comprise entre 150 Hz et 350 Hz à une fréquence d'au moins 14 kHz, ledit haut-parleur de médium et d'aigu (44B, 44D, 44G) étant situé dans l'habitacle (35).

7. Véhicule automobile (10 ; 100) selon l'une quelconque des revendications 1 à 6, dans lequel le système de sonorisation (12) comprend en outre :
- au moins un haut-parleur de médium (44E, 44F) ayant une bande allant d'une fréquence comprise entre 150 Hz et 600 Hz à une fréquence comprise entre 1 kHz et 6 kHz, et
- au moins un haut-parleur d'aigu (44B) ayant une bande passante incluant une gamme allant d'une fréquence comprise entre 1 kHz et 6 kHz à une fréquence d'au moins 14 kHz, ledit haut-parleur de médium (44E, 44F) et ledit haut-parleur d'aigu (44B) étant situés dans l'habitacle (35).

8. Procédé de sonorisation comprenant les étapes suivantes :
- fourniture d'un véhicule automobile (10 ; 100) selon l'une quelconque des revendications 1 à 7, et
- émission d'ondes sonores (52) au moins par le premier haut-parleur de grave (50A) de l'enceinte acoustique (42 ; 142 ; 242 ; 342).

## Patentansprüche

1. Kraftfahrzeug (10; 100), das eine zentrale Längsachse (X), gemäß der das Kraftfahrzeug (10; 100) sich zu bewegen bestimmt ist, eine Front gemäß der Längsachse (X) und eine Mittelebene (P) des Kraftfahrzeugs (10; 100) definiert, wobei die Mittelebene (P) durch die Längsachse (X) verläuft und vertikal ist, wenn sich das Kraftfahrzeug (10; 100) auf einer horizontalen Oberfläche (S) befindet, wobei das Kraftfahrzeug (10; 100) umfasst:
- eine Struktur (14) mit einer Spritzwand (34),
- mindestens einen Vordersitz (26A), der zur Aufnahme eines Fahrers des Kraftfahrzeugs (10; 100) vorgesehen ist,
- einen Bodenbelag (18), wobei die Spritzwand (34) und der Bodenbelag (18) teilweise einen Fahrgastraum (35) des Kraftfahrzeugs (10; 100) begrenzen, und
- ein Beschallungssystem (12), das mindestens einen akustischen Lautsprecher (42; 142; 242; 342) umfasst, der mit der Struktur (14) fest verbunden ist,
wobei der akustische Lautsprecher (42; 142; 242; 342) umfasst:
- ein Gehäuse (46; 146; 246; 346), das mindestens eine erste Öffnung (48A) definiert, und
- mindestens einen ersten Tieftöner (50A), der in der Öffnung (48A) angebracht ist, wobei sich der akustische Lautsprecher (42; 142; 242; 342) in der Nähe der Mittelebene (P) befindet:
- entweder längs zwischen der Spritzwand (34) und einer Vorderkante (27) des Vordersitzes (26A),
- oder längs rittlings über einem vorderen Bereich (40A) des Fahrgastraums (35), der zur Aufnahme des Fahrers vorgesehen ist, und einem hinteren Bereich (40B) des Fahrgastraums (35), der zur Aufnahme eines oder mehrerer hinterer Passagiere des Kraftfahrzeugs (10; 100) vorgesehen ist,
**dadurch gekennzeichnet, dass** das Gehäuse (46) dazu bestimmt ist, eine Universalhalterung zu bilden, und wobei:
- das Gehäuse (46) ferner eine zweite Öffnung (48B) definiert, wobei der akustische Lautsprecher (42) ferner einen zweiten Tieftöner (50B) umfasst, der strukturell analog zu dem ersten Tieftöner (50A) ist, wobei der zweite Tieftöner (50B) in der zweiten Öffnung (48B) Rücken an Rücken mit dem ersten Tieftöner (50A) angebracht ist, und/oder
- das Gehäuse (346) mindestens eine oder zwei zusätzliche Öffnung(en) (348A, 348B) definiert, wobei der akustische Lautsprecher (342) ferner mindestens eine oder zwei passive Membran(en) (350A, 350B) umfasst, die im Verhältnis zum Gehäuse (346) in der oder beziehungsweise in den zusätzlichen Öffnung(en) (348A, 348B) beweglich angebracht ist/sind, wobei die passive(n) Membran(en) (350A, 350B) geeignet sind, Schallwellen (352A, 352B) zu senden.

2. Kraftfahrzeug (10; 100) nach Anspruch 1, wobei der erste Tieftöner (50A) eine Bandbreite besitzt, die einen Frequenzbereich von 60 Hz bis 150 Hz einschließt.

3. Kraftfahrzeug (10; 100) nach Anspruch 1 oder 2, wobei der akustische Lautsprecher (42; 142; 242; 342) einen Schwerpunkt (G) besitzt, der sich 20 cm oder weniger von der Mittelebene (P) befindet.

4. Kraftfahrzeug (10; 100) nach einem der Ansprüche 1 bis 3, wobei der erste Tieftöner (50A) und der zweite Tieftöner (50B) jeweils zwei Magnetmotoren (56A, 56B) umfassen, wobei der akustische Lautsprecher (42) mindestens einen Metallstab (54) umfasst, der die beiden Magnetmotoren (56A, 56B) mechanisch miteinander verbindet.

5. Kraftfahrzeug (10; 100) nach einem der Ansprüche 1 bis 4, wobei der akustische Lautsprecher (242) ein Innenvolumen (250) definiert, das zum Empfangen von Schallwellen (252) bestimmt ist, die mindestens von dem ersten Tieftöner (50A) erzeugt werden, wobei das Gehäuse (246) ferner mindestens eine Lüftungsöffnung (248) aufweist, die geeignet ist, mindestens einen Teil der Schallwellen (252) aus dem Innenvolumen (250) nach außerhalb des akustischen Lautsprechers (242) zu kanalisieren.

6. Kraftfahrzeug (10; 100) nach einem der Ansprüche 1 bis 5, wobei das Beschallungssystem (12) ferner mindestens einen Mittel- und Hochtöner (44B, 44D, 44G) mit einer Bandbreite von einer Frequenz zwischen 150 Hz und 350 Hz bis zu einer Frequenz von mindestens 14 kHz umfasst, wobei sich der Mittel- und Hochtöner (44B, 44D, 44G) im Fahrgastraum (35) befinden.

7. Kraftfahrzeug (10; 100) nach einem der Ansprüche 1 bis 6, wobei das Beschallungssystem (12) ferner umfasst:
- mindestens einen Mitteltöner (44E, 44F) mit einem Band, das von einer Frequenz zwischen 150 Hz und 600 Hz bis zu einer Frequenz zwischen 1 kHz und 6 kHz reicht, und
- mindestens einen Hochtöner (44B) mit einer Bandbreite, die einen Bereich einschließt, der von einer Frequenz zwischen 1 kHz und 6 kHz bis zu einer Frequenz von mindestens 14 kHz reicht, wobei sich der Mitteltöner (44E, 44F) und der Hochtöner (44B) im Fahrgastraum (35) befinden.

8. Beschallungsverfahren, umfassend die folgenden Schritte:
- Bereitstellen eines Kraftfahrzeugs (10; 100) nach einem der Ansprüche 1 bis 7, und
- Senden von Schallwellen (52) mindestens durch den ersten Tieftöner (50A) des akustischen Lautsprechers (42; 142; 242; 342).

## Claims

1. A motor vehicle ((10; 100) defining a central longitudinal axis (X) along which the motor vehicle (10; 100) is intended to move, one front side along the longitudinal axis (X), and a median (P) plane of the motor vehicle (10; 100), the median plane (P) including the longitudinal axis (X) and being vertical when the motor vehicle (10; 100) is on a horizontal surface (S), the motor vehicle (10; 100) comprising:
- a structure (14) comprising a bulkhead (34),
- at least one front seat (26A) intended to seat a driver of the motor vehicle (10; 100),
- a floor covering (18), the bulkhead (34) and the floor covering (18) partially delimiting a passenger compartment (35) of the motor vehicle (10; 100), and
- a sound system (12) including at least one speaker enclosure (42; 142; 242; 342) rigidly attached to the structure (14),
the speaker enclosure (42; 142; 242; 342) comprising:
- one box (46; 146; 246; 346) defining at least one first opening (48A), and
- at least one first woofer (50A) mounted in the opening (48A),
the speaker enclosure (42; 142; 242; 342) being located close to the median plane (P):
- either longitudinally between the bulkhead (34) and a front edge (27) of the front seat (26A),
- or longitudinally astride a front zone (40A) of the passenger compartment (35) intended to receive the driver and a rear zone (40B) of the passenger compartment (35) intended to receive one or more rear passengers of the motor vehicle (10; 100),
**characterized in that** the box (46) is intended to form a universal support, and wherein:
- the box (46) further defines a second opening (48B), the speaker enclosure (42) further comprising a second woofer (50B) structurally analogous to the first woofer (50A), the second woofer (50B) being mounted in the second opening (48B), back-to-back with the first woofer (50A), and/or
- the box (346) defines at least one or two additional opening(s) (348A, 348B), the speaker enclosure (342) further comprising at least one or two passive membrane(s) (350A, 350B) which are mounted as to be movable relative to the box (346) in the additional opening or openings (348A, 348B) respectively, the passive membrane or membranes (350A, 350B) being apt to emit the sound waves (352A, 352B).

2. The motor vehicle (10; 100) according to claim 1, wherein the first woofer (50A) has a bandwidth including a frequency range from 60 Hz to 150 Hz.

3. The motor vehicle (10; 100) according to claim 1 or 2, wherein the speaker enclosure (42; 142; 242; 342) has a barycenter (G) located 20 cm or less from the median plane (P).

4. The motor vehicle (10; 100) according to any one of claims 1 to 3, wherein the first woofer (50A) and the second woofer (50B) comprise two magnetic motors (56A, 56B) respectively, the speaker enclosure (42) comprising at least one metal rod (54) mechanically connecting the two magnetic motors (56A, 56B) to each other.

5. The motor vehicle (10; 100) according to any of claims 1 to 4, wherein the speaker enclosure (242) defines an interior volume (250) intended to receive the sound waves (252) generated at least by the first woofer (50A), the box (246) further comprising at least one vent (248) apt to channel at least part of the sound waves (252) from the interior volume (250) to the exterior of the speaker enclosure (242).

6. The motor vehicle (10; 100) according to any of claims 1 to 5, wherein the sound system (12) further comprises at least one medium- and high-frequency loudspeaker (44B, 44D, 44G) with a bandwidth ranging from a frequency between 150 Hz and 350 Hz to a frequency of at least 14 kHz, said medium- and high-frequency loudspeaker (44B, 44D, 44G) being located inside the passenger compartment (35).

7. The motor vehicle (10; 100) according to any of claims 1 to 6, wherein the sound system (12) further comprises:
- at least one medium-frequency loudspeaker (44E, 44F) with a band ranging from a frequency comprised 150 Hz to 600 Hz to a frequency comprised between 1 kHz to 6 kHz, and
- at least one high-frequency loudspeaker (44B) with a bandwidth including a range from a frequency comprised between 1 kHz to 6 kHz to a frequency of at least 14 kHz,
said medium-frequency loudspeaker (44E, 44F) and said high-frequency loudspeaker (44B) being located inside the passenger compartment (35).

8. A sound generation method comprising the following steps:
- supplying a motor vehicle (10 ; 100) according to any of claims 1 to 7, and
- emitting sound waves (52) at least by the first woofer (50A) of the speaker enclosure (42; 142; 242; 342).
